# EUROPEAN PATENT SPECIFICATION

(11) **EP 1 238 401 B1**
(45) Date of publication and mention of the grant of the patent: **31.01.2007**
(21) Application number: 00982535.7
(22) Date of filing: 08.12.2000
(51) Int. Cl.: H01F 41/08, H01F 17/06

(54) **INDUCTOR CORE-COIL ASSEMBLY AND MANUFACTURING THEREOF**
KERN-SPULENANORDNUNG FÜR INDUKTIVITÄT UND VERFAHREN ZU IHRER HERSTELLUNG
ENSEMBLE BOBINE-NOYAU D'INDUCTANCE ET SON PROCEDE DE FABRICATION

(30) Priority: 16.12.1999 US 464982
(43) Date of publication of application: 11.09.2002
(73) Proprietor: Metglas, Inc., Conway, SC 29526 (US)
(72) Inventor: YOSHIMORI, Hitoshi, Yamatokoriyama-shi (JP); HASEGAWA, Ryusuke, Morristown, NJ 07960 (US)
(74) Representative: Hucker, Charlotte Jane
(86) International application number: PCT/US2000/033334
(87) International publication number: WO 2001/045118

(56) References cited:
- WO-A-97/06540
- US-A- 2 777 116
- PATENT ABSTRACTS OF JAPAN vol. 1996, no. 02, 29 February 1996 (1996-02-29) & JP 07 263261 A (TDK CORP), 13 October 1995 (1995-10-13)

## Description

### FIELD OF INVENTION

This invention relates to inductor core-coil assembly for use as magnetic components in electric and electronic circuits such as converters, inventers, noise filters, resonant circuits, and the like.

### BACKGROUND OF INVENTION

Currently two types of magnetic cores are widely used in the inductive components in electric and electronic circuits such as AC-to-DC and DC-to-DC converters, inverters, filters for electronic noises, electronic resonant circuits and the like. One kind is a toroidally-shaped core with no physical gap and the other has at least one gap. In both cases, copper winding(s) must be applied on the core to form a magnetic inductor. When the required copper wire size is thin, the copper winding can be automated and equipment for such operation is available. However, due to the nature of this operation, such equipment requires a wire handling mechanism akin to that of a sewing machine which uses flexible threads. When the wire size is thick, such automated process becomes difficult and manual copper winding is a standard practice. It is therefore desirable to simplify the existing copper winding mechanism which enables to improve the winding productivity in general and eliminate the manual winding operation for the components requiring thick-gauge wires.

JP 07-263 261 discloses an inductance element comprising a ringed core having a magnetic gap, a core case which surround the ringed core, and a winding which is wound around the core case.

### SUMMARY OF INVENTION

In accordance with the invention, there is provided a core-coil assembly as defined in claim 1. A magnetic core has at least one physical gap and an insulated core assembly is formed by coating the gapped magnetic core with an electrical insulator or covering it with an insulating box having a physical gap whose dimension is close to that of the magnetic core gap. A copper wire passes through the gap of the core or the core assembly to be wound on the core or the core assembly. The copper-wire winding is also performed by rotating the core or the core assembly around the tangential direction of the circumference of the core or the core assembly. To improve magnetic performance of a gapped core, a non-conventional gap is introduced whose direction is tangential to the radial direction of a toroidally wound core. The magnetically improved core with a non-conventional gap can be housed in a conventional core box with no gap and a copper winding may be applied on it to use it as in inductor. The copper winding part, on the other hand, can be prefabricated separately and a gapped core or core assembly is then inserted into the prefabricated coil through the gap. The gap section of the core or the core assembly may be filled with a magnetic or non-magnetic spacer during or after coil-winding operation. The core-coil assembling method of the present invention is much simpler than the existing method and thus is fully or semi-automated, improving core-coil assembly production yield with consistent performance.

The core-coil assembly of the present invention is especially suited for use in such devices as power converters, inverters, electrical noise filters, electrical resonators, and the like.

### BRIEF DESCRIPTION OF THE DRAWINGS

The invention will be more fully understood and further advantages will become apparent when reference is made to the following detailed description of the invention and the accompanying drawings:
Figure 1 depict a core-coil assembly which is outside the scope of the present invention, but which is useful for reference purposes.
Figure 2 shows a core assembly configuration of the core-coil assembly of Figure 1.
Figure 3 is a schematic description of the inductance versus DC bias current for different core-coil configurations according to Figure 1.
Figure 4 represents a core-coil assembly of the present invention.
Figure 5 indicates the physical configuration of the core assembly of the core-coil assembly of Figure 4.
Figure 6 shows a prefabricated coil configuration for the core-coil assembly of Figure 4.
Figure 7 shows a process of fabricating a core-coil assembly of Figure 4 using a prefabricated coil.
Figure 8 shows a case where the cross-section of the copper wire of the core-coil assembly of Figure 4 is round.
Figure 9 shows a chase where the cross-section of the copper wire of the core-coil assembly of Figure 4 is rectangular.
Figure 10 shows a chase where the cross-section of the copper wire of the core-coil assembly of Figure 4 is trapezoidal.
Figure 11 shows a prior-art core-coil assembly.
Figure 12 shows a core assembly of a prior art.
Figure 13 depicts a prior-art process of winding a copper coil.
Figure 14 shows inductance at 1 kHz versus DC bias current characteristics of the core-coil assemblies of the present invention, where curve A and B correspond to the core-coil assemblies of Figures 4 and 1, respectively, having a gap size of 1 mm.
Figure 15 shows core loss at different frequencies as a function of magnetic induction for the core-coil assemblies of the present invention, where curve A and B correspond to the core-coil assemblies of Figures 4 and 1, respectively, having a gap size of 1 mm.

### DETAILED DESCRIPTION OF THE INVENTION

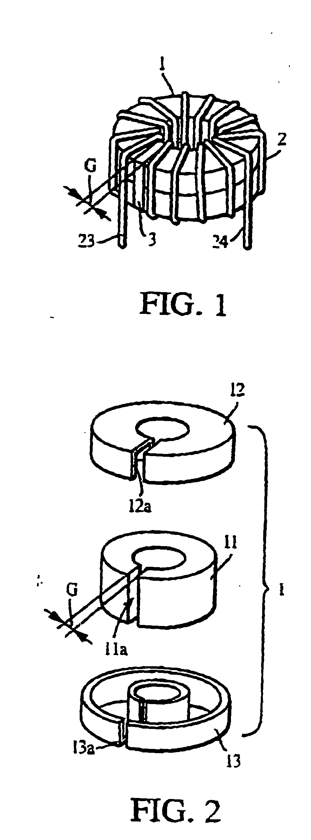

A simpler manufacturing method for magnetic core-coil assembly improves its performance as well as its production capability through automated processes. Figure 1 represents a core-coil assembly. The core 1 is composed of a magnetic core 11 with a gap 11a of width or size G and a two-part insulating boxes 12 and 13 with gaps 12s and 13a, respectively as shown in Figure 2. Copper winding 2, having leads 23 and 24, is applied to the core. A spacer 3 may be inserted into gap 11a.

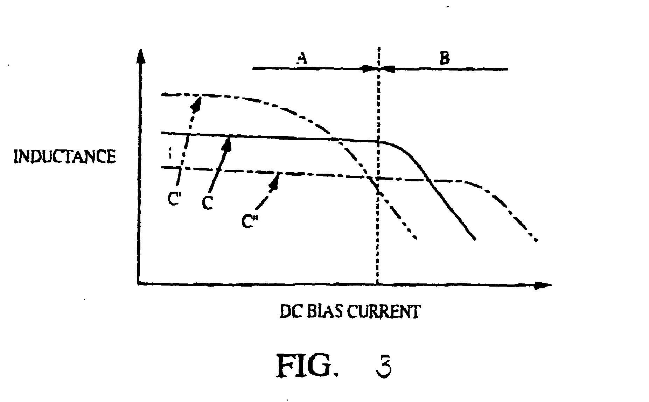

Figure 3 compares the DC bias characteristics for the inductance of a core-coil assembly of figure 1. Region A and B correspond, respectively, to "active" and "inactive" DC bias region, when a control core-coil assembly is used as a choke coil exhibiting an inductance versus DC bias current characteristic corresponding to curve C. Here The terms "active" and "inactive" mean that the choke coil is functioning as an effective and ineffective inductor, respectively. If the gap G is reduced and or the number of copper winding is increased in Figure 1 with aspect to the control core-coil assembly, the inductance versus DC bias current curve shifts to the one indicated by C'. If the gap G is increased and/or the number of copper winding turns is decreased with respect to the control core-coil assembly, curve C" results.

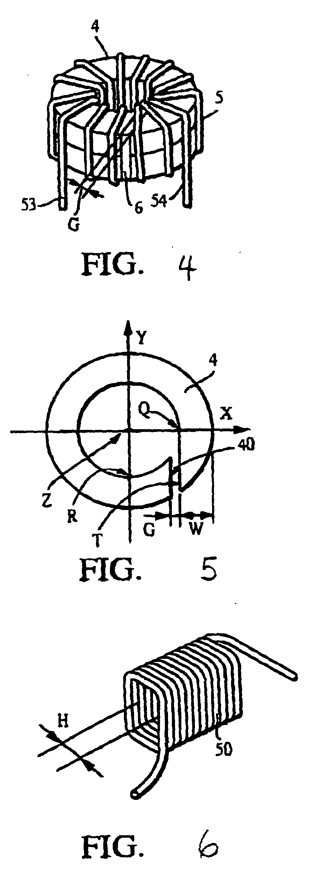

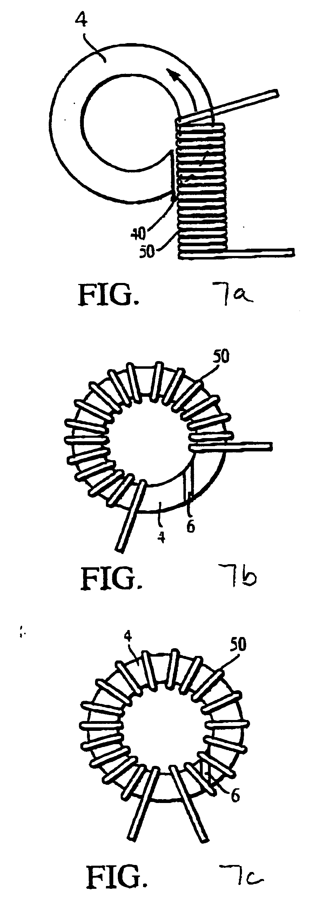

In accordance with the present invention, yet another method of fabricating a core-coil assembly is provided. An example of the core-coil assembly is shown in Figure 4, where item **6** is a spacer with a width G, item **4** is a core assembly and **5** represents copper winding with two leads **53** and **54.** Figure 5 is a top view of a core assembly **4,** where Z is the center of the toroidal core axis. The core has a gap **40**, the center of which is displaced from "Y" axis (X=0) up to X= ZQ-G/2, where ZQ is the distance between Z and the one end of the gap as indicated in Figure 5. As shown in Figure 5, when ZQ=ZR where ZR is the inner diameter of the core assembly, the plane QT is tangential to the inner circle of the core assembly. Figure 6 shows a prefabricated coil **50** whose inner dimension is such that the core assembly can be inserted into this coil. For example, the distance H in Figure 6 should be slightly larger than the core assembly width W in Figure 5. Figure 7a shows how a prefabricated coil **50** is fined through a gap **40** into a core assembly of Figure 5. When the coil **50** is placed on the core assembly **4**, a spacer **6** may be inserted into gap **40** as shown in Figure 7b, and the coil configuration may be modified to have a uniform distribution of copper windings on the core assembly as shown in Figure 7c The coil in Figure 6 and 7 has a rectangular shape, but a cylinder-shaped coil may be used for the same purpose. The spacer 6 of Figure 4 may be of a magnetic or non-magnetic material. When spacer **6** is electrically conductive, its surface may be covered with a layer of insulating tape or insulating coating. Thus the above process results in a core-coil assembly of Figure 4 with leads **53** and **54**.

The advantages of the above core-coil assembly include separate fabrication of core assembly and copper coil, each process being fully or semi-automated using simple and inexpensive equipment. In addition, due to increased surface area in the gapped regions of the magnetic core, gap width G in Figure 5 can be increased from the gap width of a core of Figure 1 with the same physical dimension as that of Figure 5, maintaining the same overall effective permeability. If the gap size is unchanged, on the other hand, effective permeability increases and core loss decreases when the core-coil assembly configuration of Figure 4 is adopted over that of Figure 1. The improved magnetic performance of the core configuration of Figure 5 is also achieved in a core-coil assembly in which the outer core box does not have a gap, which corresponds to the case where an automatic coil winding is not an issue.

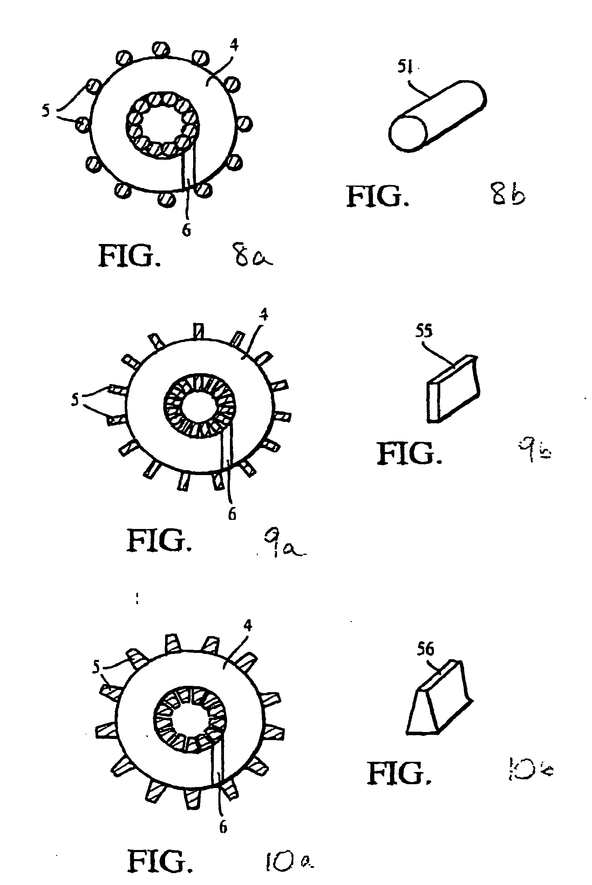

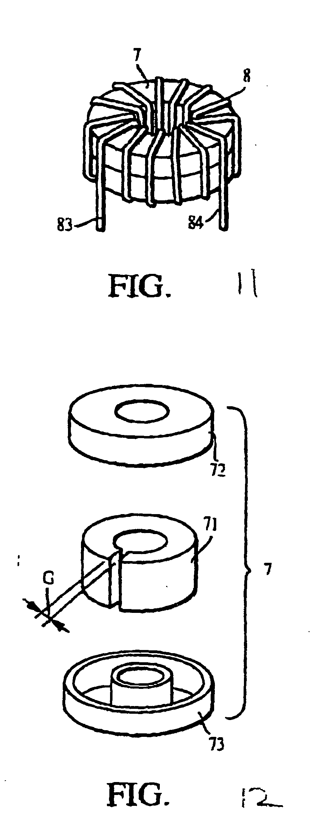

In accordance with the present invention which provides a means of automated coil winding processes for magnetic cores, the prefabricated coil **50** of Figure 7a is not only a wire with circular cross-section **51** of Figure 8b which results in a care-coil assembly with a top view of Figure 8a where gap **6**, coil **5** and core assembly **4** are indicated, but also a wire with a rectangular cross-section **55** of Figure 9b which results in a core-coil assembly of Figure 1a and a wire with a trapezoidal cross-section **56** of Figure 10b resulting in a core-coil assembly of Figure 10a. The core-coil assembly of Figure 10a helps to increase the cross-section of the copper wire, resulting in an increased packing area for electrical conduction, which in turn reduces the size of the core-coil assembly and inter-winding capacitance. Furthermore, the coil configuration of Figure 10a makes it easier to form a prefabricated coil **50** of Figure 7 because of the geometry of the coil's cross-section shown in Figure 10b.

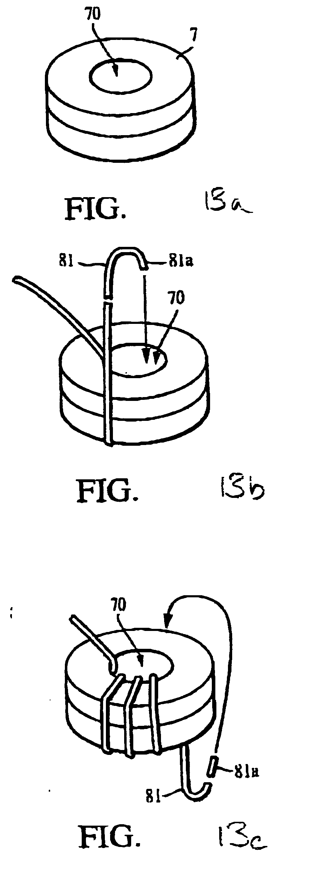

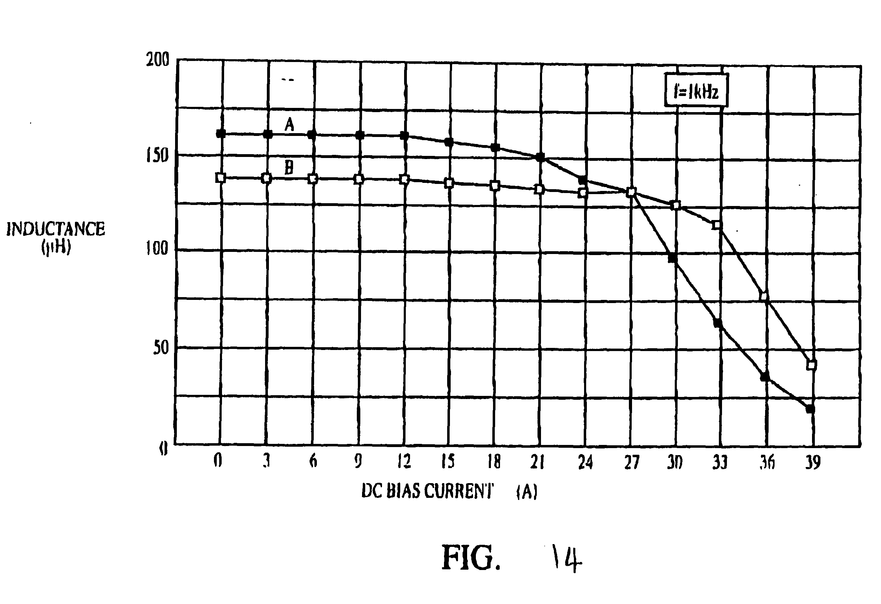

To demonstrate the difference between the present invention and the prior art, Figures 11-13 are provided. Figure 11 represents a core-coil assembly of a prior art, where core assembly **7** has a copper winding **8** with electrical leads **83** and **84**. Figure 12 shows a magnetic core **71** with a gap G and the two halves **72** and **73** of an insulating box. Figure 13a depicts a core assembly **7** which has a hole **70** in the middle of the toroidally-shaped core assembly. Figure 13b shows the beginning of a coil winding process where a copper wire **81** with its end **81a** is **f**ed through the hole **70** of a core assembly of Figure 13a. Subsequent copper winding is performed as shown in Figure 13c. The copper winding process represented in Figures 13b-c requires a mechanical process akin to that of a sewing machine.

### EXAMPLES

### 1. Sample Preparation

Magnetic cores were prepared by consolidating magnetic powder or winding a magnetic-metal ribbon onto a mandrel. When necessary, the cores were then heat-treated to achieve required magnetic properties. The cores were cut by an abrasive cutting tool or by a water jet to introduce a gap. Copper windings were applied on each core for magnetic measurements.

### 2. Magnetic Measurements

The inductance of a core-coil assembly was measured by a commercially available inductance bridge and the core's magnetic core loss was measured by the method described in the IEEE Standard 393-1931.

### 3. Magnetic Properties of Core-Coil Assemblies

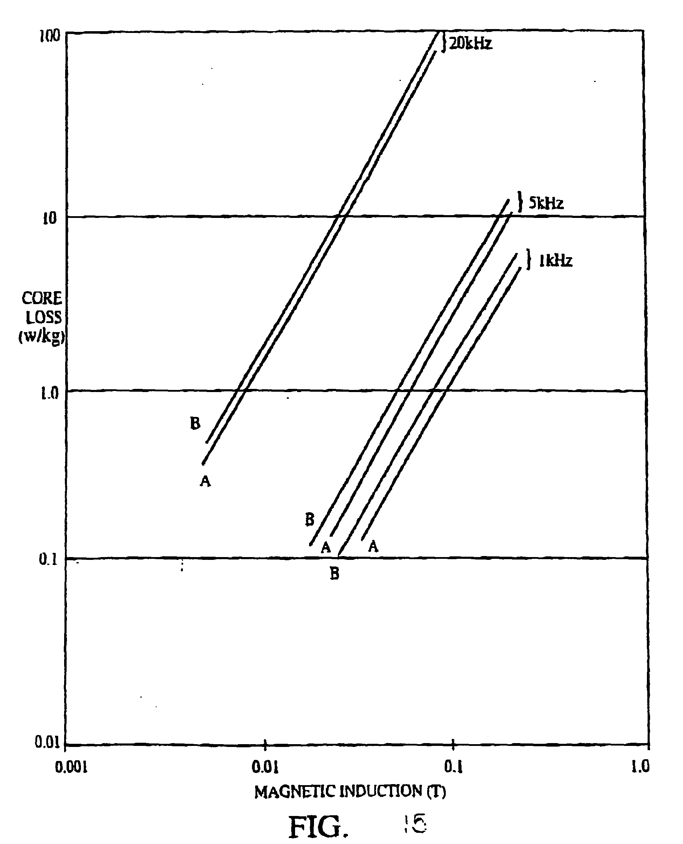

The core-coil assembly in accordance with the present invention was evaluated. Figure 14 compares the inductance measured at 1 kHz as a function of bias current for two types of core-coil assemblies, one with the configuration of Figure 4 which resulted in curve A and the other corresponding to Figure **1** which resulted in curve B. The size of the cores for both cases was 22 mm x 15 mm x 15 mm for outside diameter, inside diameter and core height, respectively. The gap G was 1 mm for both cases. The core material was iron powder. The core-coil configuration of Figure 4 exhibited a higher inductance than that of Figure 1 at lower bias current, the tendency of which was reversed at higher bias current levels. In light of the cases depicted in Figure 3, this indicates that the gap size G can be increased without affecting the inductance versus bias current characteristics when the core assembly configuration of Figure 4 is adopted over that of Figure 1. The increased gap size makes the core-coil assembly process of Figure 7 easier. The core-toil assembly of Figure 4 provides higher permeability at lower DC bias region as compared to that of Figure **1**, without reducing the gap size.

The core losses of the two types of cores of Figure 14 were measured at different frequencies as a function of magnetic induction, which are shown in Figure 15. It is clear that core loss at any given frequency is lower for the care-coil configuration of Figure 4 corresponding to curves A than that of Figure 1 corresponding to curves B, both of which have the same gap size.

Having thus described the invention rather fully in detail, it will be understood that this detail needs not be strictly adhered to but that further changes and modifications may suggest themselves to one skilled in the art all falling within the scope of the invention as defined by the subjoined claims.

## Claims

1. A core-coil assembly (4) comprising: a gapped magnetic core (11) having a periphery, an inner radius and a gap (40), the gap extending through the magnetic core in a direction tangential to the inner radius of the magnetic core; and wire windings (5) wound about the magnetic core.

2. The core-coil assembly of claim 1, which further comprises an insulating layer or box (12,13) accommodating said gapped magnetic core (11).

3. The core-coil assembly of claim 2,which comprises insulating core box (12,13) based on resin.

4. The core-coil assembly of claim 2, which comprises an outer layer based on electrically insulating paint and the like.

5. The core-coil assembly of claim 1 or claim 2, wherein the gapped magnetic core (11) is made of an amorphous alloy, a partially crystallized amorphous alloy, a nanocrystalline alloy, a crystalline alloy or a metal, or a sintered magnetic powder.

6. A core-coil assembly of claim 1, which further comprises a spacer (3)inserted in said gap (40).

7. The core-coil assembly of claim 6, wherein the spacer (3) is based on magnetic or non-magnetic materials or a composite thereof.

8. The core-coil assembly or claim 1 or claim 2, wherein the gapped magnetic core is housed in a core box without a gap.

9. The core-coil assembly of claim 1 or claim 2, wherein the wire windings are copper wire windings and the cross-section of the copper wire windings is round, rectangular or trapezoidal.

10. Use of a core-coil assembly of claim 1 or 2 as an inductive component in electric and electronic circuits, such as AC-to-DC and DC-to-DC converters, inverters, noise filters, electronic resonant circuits and the like.

## Patentansprüche

1. Kern-Spulenanordnung (4) umfassend:
einen Magnetkern mit Spalt (11), der einen Umfang, einen Innenradius und einen Spalt (40) aufweist, wobei sich der Spalt durch den Magnetkern in einer Richtung tangential zu dem Innenradius des Magnetkerns erstreckt; und
Drahtwicklungen (5), die um den Magnetkern gewickelt sind.

2. Kern-Spulenanordnung gemäß Anspruch 1, die ferner eine isolierende Schicht oder ein Gehäuse (12, 13) umfasst, die/das den Magnetkern mit Spalt (11) aufnehmen.

3. Kern-Spulenanordnung gemäß Anspruch 2, die ein isolierendes Kerngehäuse (12, 13) auf Harzbasis umfasst.

4. Kern-Spulenanordnung gemäß Anspruch 2, die eine äußere Schicht basierend auf elektrisch isolierender Farbe und dergleichen umfasst.

5. Kern-Spulenanordnung gemäß Anspruch 1 oder Anspruch 2, bei der der Magnetkern mit Spalt (11) aus einer amorphen Legierung, einer teilweise kristallisierten amorphen Legierung, einer nanokristallinen Legierung, einer kristallinen Legierung oder einem Metall oder einem gesinterten magnetischen Pulver hergestellt ist.

6. Kern-Spulenanordnung gemäß Anspruch 1, die ferner einen in den Spalt (40) eingefügten Abstandshalter (3) umfasst.

7. Kern-Spulenanordnung gemäß Anspruchs 6, bei der der Abstandshalter (3) auf magnetischen oder nicht-magnetischen Materialien oder einem Gemisch davon basiert.

8. Kern-Spulenanordnung gemäß Anspruch 1 oder Anspruch 2, bei der Magnetkern mit Spalt in einem Kerngehäuse ohne einen Spalt untergebracht ist.

9. Kern-Spulenanordnung gemäß Anspruch 1 oder Anspruch 2, bei der die Drahtwicklungen Kupferdrahtwicklungen sind und der Querschnitt der Kupferdrahtwicklungen rund, rechteckig oder trapezförmig ist.

10. Verwendung einer Kern-Spulenanordnung gemäß Anspruch 1 oder 2 als induktives Bauteil bei elektrischen und elektronischen Schaltungen, wie beispielsweise AC/DC- und DC/DC-Wandlern, Invertierern, Rauschfiltern, elektronischen Resonanzschaltungen und dergleichen.

## Revendications

1. Ensemble noyau-bobine (4) comportant : un noyau magnétique à entrefer (11) ayant une périphérie, un rayon intérieur et un entrefer (40), l'entrefer s'étendant à travers le noyau magnétique dans une direction tangentielle au rayon intérieur du noyau magnétique ; et des enroulements de fil (5) enroulés autour du noyau magnétique.

2. Ensemble noyau-bobine selon la revendication 1, qui comporte en outre une couche ou un boîtier isolant (12, 13) recevant ledit noyau magnétique à entrefer (11).

3. Ensemble noyau-bobine selon la revendication 2, qui comporte un boîtier isolant de noyau (12, 13) à base de résine.

4. Ensemble noyau-bobine selon la revendication 2, qui comporte une couche extérieure à base de peinture électriquement isolante et analogue.

5. Ensemble noyau-bobine selon la revendication 1 ou la revendication 2, dans lequel le noyau magnétique à entrefer (11) est constitué d'un alliage amorphe, d'un alliage amorphe partiellement cristallisé, d'un alliage nanocristallin, d'un alliage cristallin ou d'un métal, ou d'une poudre magnétique frittée.

6. Ensemble noyau-bobine selon la revendication 1, qui comporte en outre un élément d'espacement (3) inséré dans ledit entrefer (40).

7. Ensemble noyau-bobine selon la revendication 6, dans lequel l'élément d'espacement (3) est à base de matériaux magnétiques ou non magnétiques ou d'un composite de ceux-ci.

8. Ensemble noyau-bobine selon la revendication 1 ou la revendication 2, dans lequel le noyau magnétique à entrefer est logé dans un boîtier de noyau sans entrefer.

9. Ensemble noyau-bobine selon la revendication 1 ou la revendication 2, dans lequel les enroulements de fil sont des enroulements de fil en cuivre et la section transversale des enroulements de fil de cuivre est ronde, rectangulaire ou trapézoïdale.

10. Utilisation d'un ensemble noyau-bobine selon la revendication 1 ou 2 en tant que composant inductif dans des circuits électriques et électroniques, tels que des convertisseurs de courant alternatif en courant continu et de courant continu en courant continu, des onduleurs, des filtres de bruit, des circuits résonants électroniques et analogues.
